(19) Europäisches Patentamt
European Patent Office
Office européen des brevets

(11) **EP 4 121 474 B1**

(12) **EUROPÄISCHE PATENTSCHRIFT**

(45) Veröffentlichungstag und Bekanntmachung des Hinweises auf die Patenterteilung:
**07.02.2024 Patentblatt 2024/06**

(21) Anmeldenummer: **21709691.6**

(22) Anmeldetag: **08.03.2021**

(51) Internationale Patentklassifikation (IPC):
**C08G 59/50** (2006.01)    **C08G 59/68** (2006.01)

(52) Gemeinsame Patentklassifikation (CPC):
**C08G 59/5026; C08G 59/68; C08G 59/686**

(86) Internationale Anmeldenummer:
**PCT/EP2021/055716**

(87) Internationale Veröffentlichungsnummer:
**WO 2021/185607 (23.09.2021 Gazette 2021/38)**

(54) **HÄRTERZUSAMMENSETZUNG AUF BASIS VON DIAMINOMETHYLCYCLOHEXAN UND 1,3-CYCLO-HEXAN-BIS(METHYLAMIN) FÜR EINE EPOXIDHARZMASSE, EPOXIDHARZMASSE UND MEHRKOMPONENTEN-EPOXIDHARZSYSTEM**

CURING COMPOSITION ON THE BASIS OF DIAMINOMETHYLCYCLOHEXANE AND 1,3-CYCLO-HEXANE-BIS(METHYLAMINE) FOR AN EPOXY RESIN COMPOUND, EPOXY RESIN COMPOUND AND MULTICOMPONENT EPOXY RESIN SYSTEM

COMPOSITION DE DURCISSEMENT À BASE DE DIAMINOMÉTHYLCYCLOHEXANE ET DE 1,3-CYCLO-HEXANE-BIS(MÉTHYLAMINE) POUR UN COMPOSÉ DE RÉSINE ÉPOXYDE, COMPOSÉ DE RÉSINE ÉPOXY ET SYSTÈME DE RÉSINE ÉPOXYDE À COMPOSANTS MULTIPLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.03.2020 EP 20163785**

(43) Veröffentlichungstag der Anmeldung:
**25.01.2023 Patentblatt 2023/04**

(73) Patentinhaber: **Hilti Aktiengesellschaft**
**9494 Schaan (LI)**

(72) Erfinder:
• **BEHRENS, Nicole**
**81245 München (DE)**
• **NICKERL, Georg**
**86911 Dießen am Ammersee (DE)**

(74) Vertreter: **Hilti Aktiengesellschaft**
**Corporate Intellectual Property**
**Feldkircherstrasse 100**
**Postfach 333**
**9494 Schaan (LI)**

(56) Entgegenhaltungen:
EP-A1- 3 489 272       EP-A2- 0 443 344
US-A1- 2012 226 017    US-A1- 2017 081 487
US-A1- 2019 352 451    US-A1- 2019 382 634

EP 4 121 474 B1

**Beschreibung**

Die Erfindung betrifft eine Härterzusammensetzung auf Basis von Diaminomethylcyclohexan und 1,3-Cyclo-hexan-bis(methyl-amin) für eine Epoxidharzmasse zur chemischen Befestigung von Konstruktionselementen, eine Epoxidharzmasse und ein Mehrkomponenten-Epoxidharzsystem. Die Erfindung betrifft ferner ein Verfahren zur chemischen Befestigung von Konstruktionselementen in Bohrlöchern.

Mehrkomponenten-Mörtelmassen auf der Grundlage von härtbaren Epoxidharzen und Aminhärtern sind seit langem bekannt und werden als Klebstoffe, Spachtelmassen zur Rissverfüllung und chemische Dübel zur Befestigung von Konstruktionselementen wie Ankerstangen, Bewehrungseisen und Schrauben in Bohrlöchern verschiedenen Untergrunds verwendet.

Im Stand der Technik sind Mehrkomponenten-Mörtelmassen auf der Grundlage von härtbaren Epoxidharzen und Aminhärtern beschrieben, die eine sehr gute Belastbarkeit bei hohen Temperaturen zeigen. So beschreiben die noch nicht offen gelegten europäischen Anmeldungen mit den Anmeldenummern 18195417.3, 18195422.3 und 18195415.7 Mehrkomponenten-Epoxidharzsysteme, bei denen die Härterkomponente ein Salz (S) ausgewählt aus der Gruppe bestehend aus Salzen der Salpetersäure, Salzen der Salpetrigen Säure, Salzen der Halogene und Salzen der Trifluormethansulfonsäure enthält. Diese Systeme zeigen bereits eine gute bis sehr gute Performance bei hohen Temperaturen in Form hoher Auszugsfestigkeiten. Es besteht jedoch weiterhin Bedarf die bestehenden Systeme gerade hinsichtlich ihrer Auszugsfestigkeiten bei hohen Temperaturen zu verbessern.

Im Dokument WO2011/033104 A1 wird eine Zusammensetzung beschrieben umfassend mindestens ein Epoxidharz und eine Mischung enthaltend ein Stereoisomerengemisch von Diaminomethylcyclohexan in ganz bestimmten Mengenverhältnissen. Es wird postuliert, dass unterschiedliche Mengenverhältnisse der Stereoisomere dazu genutzt werden können, das Aushärteverhalten der Epoxidharzmasse bedarfsgerecht einzustellen. Das Dokument US-A-2017/081487 offenbart eine Härterzusammensetzung enthaltend 1,3-bis(aminomethyl)cyclohexan und einen Beschleuniger, der mindestens eine Verbindung ausgewählt aus der Gruppe bestehend aus Sulfonsäure und Imidazolium-Salz einer Sulfonsäure enthält.

Der Einsatz von Aminen, welche Aminogruppen an sekundären Kohlenstoffatomen aufweisen, wie beispielsweise das zuvor beschriebene Stereoisomerengemisch von Diaminomethylcyclohexan, als Härter in Mörtelmassen auf Epoxid-Amin-Basis ist derzeit stark begrenzt, da diese Mörtelmassen Aushärtezeiten von mehr als 24 Stunden aufweisen. Diese langen Aushärtezeiten sind auf der Baustelle nicht praktikabel, da sie die weiteren Arbeiten verzögern. Die beschleunigende Wirkung der üblicherweise in Mehrkomponenten-Epoxidharzsysteme eingesetzten Beschleuniger, wie beispielsweise Novolak, styrolisiertes Phenol, Salicylsäure oder Ancamin K54, reicht hierbei nicht, um die Aushärtezeiten auf einen akzeptablen Zeitraum, wie beispielsweise 6 Stunden, zu verkürzen. Diaminomethylcyclohexan kommt daher in Härterzusammensetzungen für Mehrkomponenten-Epoxidharzsysteme nicht oder wenn überhaupt lediglich in sehr geringen Konzentrationen zum Einsatz. Es wäre jedoch wünschenswert Diaminomethylcyclohexan bei der Formulierung von Mörtelmassen berücksichtigen zu können, da sich damit das Eigenschaftsprofil einer Mörtelmasse variabler gestalten ließe und gerade die Auszugsfestigkeiten bei hohen Temperaturen, wie beispielsweise bei 80 °C, positiv beeinflusst werden können.

Aufgabe der Erfindung ist es daher eine Epoxidharzmasse bereitzustellen, die einen substantiellen Anteil an Diaminomethylcyclohexan enthält und die für Befestigungszwecke geeignet ist. Im Vergleich zu herkömmlichen Mörtelmassen soll eine verkürzte Aushärtedauer bei vergleichbar hoher Auszugsfestigkeit erreicht werden. Es ist insbesondere Aufgabe der vorliegenden Erfindung eine Epoxidharzmasse bereitzustellen, die im Vergleich zu herkömmlichen Mörtelmassen eine verkürzte Aushärtedauer aufweist und eine verbesserte Auszugsfestigkeit bei erhöhten Temperaturen, wie beispielsweise in einem Temperaturbereich von 40 °C bis 120 °C aufweist. Des Weiteren ist es wünschenswert, dass die Epoxidharzmasse im Vergleich zu herkömmlichen Mörtelmassen auf Epoxid-Amin Basis eine verbesserte Auszugsfestigkeit in wassergefüllten Bohrlöchern zeigt.

Die der Erfindung zugrundeliegende Aufgabe wird durch Bereitstellung einer Härterzusammensetzung gemäß Anspruch 1 gelöst. Bevorzugte Ausführungsformen der erfindungsgemäßen Härterzusammensetzung sind in den Unteransprüchen angegeben, die wahlweise miteinander kombiniert werden können.

Gegenstand der Erfindung ist ferner eine Epoxidharzmasse gemäß Anspruch 10 und ein Mehrkomponenten-Epoxidharzsystem nach Anspruch 11. Bevorzugte Ausführungsformen der erfindungsgemäßen Epoxidharzmasse und des Mehrkomponenten-Epoxidharzsystems sind in den Unteransprüchen angegeben, die wahlweise miteinander kombiniert werden können.

Gegenstand der Erfindung ist ferner ein Verfahren zur chemischen Befestigung von Konstruktionselementen in Bohrlöchern gemäß Anspruch 13.

Ein weiterer Gegenstand der vorliegenden Erfindung ist die Verwendung einer Aminmischung enthaltend 5 bis 50 Gew.-% Diaminomethylcyclohexan und mindestens 25 Gew.-% 1,3-Cyclo-hexan-bis(methyl-amin) bezogen auf das Gesamtgewicht der Aminmischung in einer Härterzusammensetzung zur Verbesserung der Auszugsfestigkeiten bei hohen Temperaturen.

Erfindungsgemäß wird eine Härterzusammensetzung für eine Epoxidharzmasse bereitgestellt umfassend eine Aminmischung mit 5 bis 50 Gew.-% Diaminomethylcyclohexan und mindestens 25 Gew.-% 1,3-Cyclo-hexan-bis(methylamin) bezogen auf das Gesamtgewicht der Aminmischung. Ferner umfasst die Härterzusammensetzung mindestens ein Salz (S) als Beschleuniger, wobei das als Beschleuniger verwendete Salz (S) aus der Gruppe bestehend aus Salzen der Salpetersäure, Salzen der Salpetrigen Säure, Salzen der Halogene, Salzen der Trifluormethansulfonsäure und Kombinationen davon ausgewählt wird.

Die Verwendung der erfindungsgemäßen Härterzusammensetzung in einer Epoxidharzmasse für Befestigungszwecke führt zu einer erheblichen Beschleunigung der Aushärtereaktion. Die gehärteten Massen zeigen eine hervorragende Auszugsfestigkeit bei erhöhten Temperaturen und können bereits nach kurzer Zeit, innerhalb von etwa 4 bis 6 Stunden, und teilweise sogar noch früher, belastet werden. Somit eignet sich die erfindungsgemäße Härterzusammensetzung sowie die daraus hergestellten Epoxidharzmassen insbesondere für die Anwendung in Ländern mit hohen Temperaturen. Ferner zeigen die gehärteten Massen eine hervorragende Auszugsfestigkeit im wassergefüllten Bohrloch.

Im Sinne der Erfindung haben die hier und in der nachfolgenden Beschreibung verwendeten Begriffe die folgende Bedeutung:

Eine *"Härterzusammensetzung"* ist eine Zusammensetzung umfassend eine Aminmischung mit 5 bis 50 Gew.-% Diaminomethylcyclohexan und mindestens 25 Gew.-% 1,3-Cyclo-hexan-bis(methyl-amin) bezogen auf das Gesamtgewicht der Aminmischung sowie mindestens ein Salz (S).

*"Mehrkomponenten-Epoxidharzsystem"* ist ein System, das mehrere voneinander getrennt gelagerte Komponenten umfasst, so dass eine Härtung erst nach dem Mischen aller Komponenten erfolgt; erfindungsgemäß umfasst das Mehrkomponenten-Epoxidharzsystem mindestens ein Epoxidharzsystem sowie mindestens eine Härterkomponente; in einer bevorzugten Ausführungsform ist das Mehrkomponenten-Epoxidharzsystem ein Zweikomponenten-Epoxidharzsystem umfassend ein Epoxidharzsystem sowie eine Härterkomponente.

*"Härterkomponente"* ist eine Komponente des Mehrkomponenten-Epoxidharzsystems umfassend eine Aminmischung mit 5 bis 50 Gew.-% Diaminomethylcyclohexan und mindestens 25 Gew.-% 1,3-Cyclo-hexan-bis(methyl-amin) bezogen auf das Gesamtgewicht der Aminmischung. In einer bevorzugten Ausführungsform umfasst die Härterkomponente auch ein Salz (S) und ist somit eine erfindungsgemäße Härterzusammensetzung.

*"Epoxidharzsystem"* ist eine Komponente des Mehrkomponenten-Epoxidharzsystem umfassend mindestens ein härtbares Epoxidharz.

*"Epoxidharzmasse"* bezeichnet die Formulierung, die durch Mischen der Härterzusammensetzung bzw. der Härterkomponente mit mindestens einem härtbaren Epoxidharz erhalten wird und als solches direkt zur chemischen Befestigung verwendet werden kann.

*"aliphatische Verbindungen"* sind acyclische oder cyclische, gesättigte oder ungesättigte Kohlenstoffverbindungen, ausgenommen aromatische Verbindungen;

*"araliphatische Verbindungen"* sind aliphatische Verbindungen mit einem aromatischen Grundgerüst, so dass im Falle einer funktionalisierten araliphatischen Verbindung eine vorhandene funktionelle Gruppe an den aliphatischen und nicht den aromatischen Teil der Verbindung angebunden ist;

*"aromatische Verbindungen"* sind Verbindungen, die der Hückel (4n+2)-Regel folgen;

*"Amine"* sind Verbindungen, die durch Austausch von einem, zwei oder drei Wasserstoffatomen durch Kohlenwasserstoffgruppen aus Ammoniak abgeleitet sind und die allgemeinen Strukturen $RNH_2$ (primäre Amine), $R_2NH$ (sekundäre Amine) und $R_3N$ (tertiäre Amine) aufweisen (siehe: IUPAC Compendium of Chemical Terminology, 2nd ed. (the "Gold Book"), Compiled by A. D. McNaught and A. Wilkinson, Blackwell Scientific Publications, Oxford (1997));

*"Aminmischung"* bezeichnet eine Mischung aus mindestens zwei unterschiedlichen Aminen, wobei die Mischung erfindungsgemäß 5 bis 50 Gew.-% Diaminomethylcyclohexan und mindestens 25 Gew.-% 1,3-Cyclo-hexan-bis(methylamin) bezogen auf das Gesamtgewicht der Aminmischung umfasst. Optional kann die Aminmischung ein oder mehrere weitere Amine enthalten.

*"Salze"* sind Verbindungen, die aus positiv geladenen Ionen (Kationen) und negativ geladenen Ionen (Anionen) aufgebaut sind. Zwischen diesen Ionen liegen ionische

Bindungen vor. Der Ausdruck *"Salze der Salpetersäure"* beschreibt Verbindungen, die von Salpetersäure ($HNO_3$) abgeleitet werden und als Anion ein Nitrat ($NO_3^-$) umfassen. Der Ausdruck *"Salze der Salpetrige Säure"* beschreibt Verbindungen, die von der Salpetrigen Säure ($HNO_2$) abgeleitet werden und als Anion ein Nitrit ($NO_2^-$) umfassen.

Der Ausdruck "*Salze der Halogene*" beschreibt Verbindungen, die als Anion ein Element der 7. Hauptgruppe des Periodensystems umfassen. Insbesondere sind unter dem Ausdruck der "*Salze der Halogene*" solche Verbindungen zu verstehen, die die als Anion ein Fluorid (F⁻), Chlorid (Cl⁻), ein Bromid (Br) oder Iodid (I⁻) umfassen. Der Ausdruck "*Salze der Trifluormethansulfonsäure*" beschreibt Verbindungen, die von der Trifluormethansulfonsäure (CF$_3$SO$_3$H) abgeleitet werden und als Anion ein Triflat (CF$_3$SO$_3$⁻) umfassen. Der Begriff Salz im Sinne der vorliegenden Erfindung umfasst auch die entsprechenden Hydrate der Salze. Die Salze (S), welche als Beschleuniger eingesetzt werden, werden auch als Salze im Sinne der vorliegenden Erfindung bezeichnet.

"*ein", "eine", "einer*" als Artikel vor einer chemischen Verbindungsklasse, z.B. vor dem Wort "Füllstoff", dass eine oder mehrere unter diese chemische Verbindungsklasse fallende Verbindungen, z.B. verschiedene "Füllstoffe", gemeint sein können;

"*mindestens ein", "mindestens eine", "mindestens einer*" zahlenmäßig "ein oder mehrere"; in einer bevorzugten Ausführungsform ist mit diesem Begriff zahlenmäßig "ein", "eine", "einer" gemeint;

"*enthalten", "umfassen*" und "*beinhalten*", dass neben den genannten Bestandteilen noch weitere vorhanden sein können; diese Begriffe sind einschließlich gemeint und umfassen daher auch "*bestehen aus*"; "*bestehen aus*" ist abschließend gemeint und bedeutet, dass keine weiteren Bestandteile vorhanden sein können; in einer bevorzugten Ausführungsform bedeuten die Begriffe "*enthalten", "umfassen*" und "*beinhalten*" den Begriff "*bestehen aus*";

Alle in diesem Text genannten Normen (z.B. DIN-Normen) wurden in der zum Anmeldetag dieser Anmeldung aktuellen Ausgabe verwendet.

Erfindungsgemäß umfasst die Härterzusammensetzung als Härter eine Aminmischung enthaltend 5 bis 50 Gew.-% Diaminomethylcyclohexan und mindestens 25 Gew.-% 1,3-Cyclo-hexan-bis(methyl-amin) bezogen auf das Gesamtgewicht der Aminmischung. Diaminomethylcyclohexan, auch als MDACH bezeichnet, liegt in der Regel als Gemisch von sieben Isomeren von 2,4- und 2,6-Diamino-1-methylcyclohexan vor und ist kommerziell unter dem Handelsnamen Baxxodur EC 210 (BASF SE) erhältlich. Das Stereoisomerengemisch ist in der EP2478030 A1 beschrieben, deren Inhalt hiermit in die Anmeldung aufgenommen wird. Es ist jedoch auch möglich ein oder mehrere Isomere in beliebiger Kombination in der erfindungsgemäßen Härterzusammensetzung zu verwenden.

1,3-Cyclo-hexan-bis(methyl-amin), auch bekannt unter 1,3-Bis(aminomethyl)cyclohexan oder unter der Abkürzung 1,3-BAC, ist eine cycloaliphatisches Amin.

Erfindungsgemäß umfasst die Aminmischung 5 bis 50 Gew.-% Diaminomethylcyclohexan, vorzugsweise 8 bis 40 Gew.-% und weiter bevorzugt 10 bis 30 Gew.-%, jeweils bezogen auf das Gesamtgewicht der Aminmischung.

Erfindungsgemäß umfasst die Aminmischung mindestens 25 Gew.-% 1,3-Cyclo-hexan-bis(methyl-amin) bezogen auf das Gesamtgewicht der Aminmischung. Vorzugsweise ist der gewichtsprozentuale Anteil an 1,3-Cyclo-hexan-bis(methyl-amin) an der Aminmischung 25 bis 95 Gew.-%, bevorzugter 30 bis 95 Gew.-% und weiter bevorzugt 30 bis 80 Gew.-%, jeweils bezogen auf das Gesamtgewicht der Aminmischung.

Vorzugsweise umfasst die Aminmischung zusätzlich zu Diaminomethylcyclohexan und 1,3-Cyclo-hexan-bis(methyl-amin) in den zuvor beschriebenen gewichtsprozentualen Bereichen 1,3-Benzoldimethanamin. 1,3-Benzoldimethanamin, auch bekannt als m-Xylylendiamin oder mXDA, ist ein araliphatisches Amin, das gute Eigenschaften in allen den für chemische Anker wichtigen Leistungsdimensionen zeigt. Die bevorzugte Beimischung ermöglicht somit eine größere Flexibilität bei der Formulierung der Härterzusammensetzung.

1,3-Benzoldimethanamin ist vorzugsweise in einem gewichtsprozentualen Bereich von ≤ 55 Gew.-% in der Aminmischung enthalten bezogen auf das Gesamtgewicht der Aminmischung. Vorzugsweise umfasst die Aminmischung 0 bis 55 Gew.-% 1,3-Benzoldimethanamin, bevorzugter 5 bis 50 Gew.-% und noch weiter bevorzugt 10 bis 50 Gew.-%, jeweils bezogen auf das Gesamtgewicht der Aminmischung.

In einer besonders bevorzugten Ausführungsform der Erfindung umfasst die die Aminmischung 5 bis 50 Gew.-% Diaminomethylcyclohexan, mindestens 25 Gew.-% 1,3-Cyclo-hexan-bis(methyl-amin) und ≤ 55 Gew.-% 1,3-Benzoldimethanamin jeweils bezogen auf das Gesamtgewicht der Aminmischung. In einer anderen bevorzugten Ausführungsform umfasst die Aminmischung 5 bis 50 Gew.-% Diaminomethylcyclohexan, 30 bis 80 Gew.-% 1,3-Cyclo-hexan-bis(methyl-amin) und 10 bis 55 Gew.-% 1,3-Benzoldimethanamin jeweils bezogen auf das Gesamtgewicht der Aminmischung.

Es können zusätzlich auch Amin-Epoxid-Addukte der vorgenannten Amine in der Aminmischung verwendet werden. Der Begriff Amin-Epoxid-Addukte bezeichnet dabei die Reaktionsprodukte von Diaminomethylcyclohexan, Cyclo-hexan-bis(methyl-amin) oder 1,3-Benzoldimethanamin mit Epoxiden, wobei bei der Reaktion das Amin im Überschuss vorliegt. Das Amin-Epoxid-Addukt liegt schließlich im Amin gelöst vor.

Der Anteil der Aminmischung in der Härterzusammensetzung beträgt vorzugsweise von 30 bis 98 Gew.-%, bevorzugt von 40 bis 98 Gew.-%, bezogen auf das Gesamtgewicht der Härterzusammensetzung.

Die Aminmischung kann zusätzlich zu den zuvor beschriebenen Aminen noch weitere gegenüber Epoxidgruppen reaktive Amine enthalten. Beispiele für gegenüber Epoxidgruppen reaktive geeignete Amine sind im Folgenden angegeben, wobei diese sowohl einzeln als auch im Gemisch verwendet werden können: 1,2-Diaminoethan(ethylendiamin), 1,2-Propandiamin, 1,3-Propandiamin, 1,4-Diaminobutan, 2,2-Dimethyl-1,3-propandiamin(neopentandiamin), Diethylaminopropylamin (DEAPA), 2-Methyl-1,5-diaminopentan, 1,3-Diaminopentan, 2,2,4- oder 2,4,4-Trimethyl-1,6-diaminohexan und Gemische davon (TMD), 1,2-Bis(aminomethyl)cyclohexan, Hexamethylendiamin (HMD), 1,2- und 1,4-Diaminocyclohexan (1,2-DACH und 1,4-DACH), Bis(4-amino-3-methylcyclohexyl)methan, Diethylentriamin (DETA), 4-Azaheptan-1, 7-diamin, 1,1 1-Diamino-3,6,9-trioxundecan, 1,8-Diamino-3, 6-dioxaoctan, 1,5-Diamino-methyl-3-azapentan, 1,10-Diamino-4, 7-dioxadecan, Bis(3-aminopropyl)amin, 1,13-Diamino-4,7, 10-trioxatridecan, 4-Aminomethyl-1, 8-diaminooctan, 2-Butyl-2-ethyl-1, 5-diaminopentan, N,N-Bis-(3-aminopropyl)methylamin, Triethylentetramin (TETA), Tetraethylenpentamin (TEPA), Pentaethylenhexamin (PEHA), 1,4-Benzoldimethanamin (p-Xylylendiamin, PXDA), 5-(Aminomethyl)bicyclo[[2.2.1]hept-2-yl]methylamin (NBDA, Norbornandiamin), Dimethyldipropylentriamin, Dimethylaminopropyl-aminopropylamin (DMAPAPA), 3-Aminomethyl-3,5,5-trimethylcyclohexylamin (Isophorondiamin (IPDA)), Diaminodicyclohexylmethan (PACM), Diethylmethylbenzoldiamin (DETDA), 4,4'-Diaminodiphenylsulfon (Dapson), gemischte polycyclische Amine (MPCA) (z.B. Ancamine 2168), Dimethyldiaminodicyclohexylmethan (Laromin C260), 2,2-Bis(4-aminocyclohexyl)propan, $(3(4),8(9)Bis(aminomethyldicyclo[5.2.1.0^{2,6}]decan$ (Isomerengemisch, tricyclischer primärer Amine; TCD-Diamin), N,N'-Diaminopropyl-2-methyl-cyclohexan-1,3-diamin, N,N'-Diaminopropyl-4-methyl-cyclohexan-1,3-diamin, N-(3-Aminopropyl)cyclohexylamin, und 2-(2,2,6,6-tetramethylpiperidin-4-yl)propan-1,3-diamin.

Erfindungsgemäß enthält die Härterzusammensetzung als Beschleuniger mindestens ein Salz (S). Das Salz (S) ist erfindungsgemäß mindestens ein Salz ausgewählt aus der Gruppe bestehend aus Salzen der Salpetersäure, Salzen der Salpetrigen Säure, Salzen der Halogene, Salzen der Trifluormethansulfonsäure sowie Kombinationen davon. Vorzugsweise ist das Salz (S) mindestens ein Salz ausgewählt aus der Gruppe bestehend aus Salzen der Salpetersäure, Salzen der Halogene, Salzen der Trifluormethansulfonsäure sowie Kombinationen davon. Es hat sich als besonders bevorzugt herausgestellt, dass das Salz (S) ausgewählt ist aus der Gruppe bestehend aus Nitraten ($NO_3^-$), Iodiden ($I^-$), Triflaten ($CF_3SO_3^-$) sowie Kombinationen davon.

Als Salze der Salpetersäure eignen sich insbesondere Alkalimetallnitrate, Erdalkalimetallnitrate, Lanthanoidnitrate, Aluminiumnitrat, Ammoniumnitrat sowie Mischungen davon. Entsprechende Salze der Salpetersäure sind im Handel käuflich erhältlich. Vorzugsweise werden als Salze der Salpetersäure Alkalimetallnitrate und/oder Erdalkalimetallnitrate verwendet, wie beispielsweise $Ca(NO_3)_2$ oder NaNOs. Es ist auch möglich, dass als Salz (S) eine Lösung eines Salzes in Salpetersäure eingesetzt wird, wie beispielsweise eine Lösung enthaltend $Ca(NO_3)_2/HNO_3$. Zur Herstellung dieser Lösung wird $CaCO_3$ in $HNO_3$ gelöst.

Als Salze der Salpetrigen Säure eignen sich insbesondere Alkalimetallnitrite, Erdalkalimetallnitrite, Lanthanoidnitrite, Aluminiumnitrit, Ammoniumnitrit sowie Mischungen davon. Entsprechende Salze der Salpetrigen Säure sind im Handel käuflich erhältlich. Vorzugsweise werden als Salze der Salpetrigen Säure Alkalimetallnitrite und/oder Erdalkalimetallnitrite verwendet, wie beispielsweise $Ca(NO_2)_2$.

Als Salze der Halogene eignen sich insbesondere Alkalimetallhalogenide, Erdalkalimetallhalogenide, Lanthanoidhalogenide, Aluminiumhalogenide, Ammoniumhalogenide sowie Mischungen davon. Entsprechende Salze der Halogene sind im Handel käuflich erhältlich. Vorzugsweise werden die Halogene ausgewählt aus der Gruppe bestehend aus Chlorid, Bromid, Iodid sowie Mischungen davon, wobei insbesondere Iodide bevorzugt verwendet werden.

Als Salze der Trifluormethansulfonsäure eignen sich insbesondere Alkalimetalltriflate, Erdalkalimetalltriflate, Lanthanoidtriflate, Aluminiumtriflat, Ammoniumtriflat sowie Mischungen davon. Entsprechende Salze der Trifluormethansulfonsäure sind im Handel käuflich erhältlich. Vorzugsweise werden als Salze der Trifluormethansulfonsäure Alkalimetallnitrate und/oder Erdalkalimetallnitrate verwendet, wie beispielsweise $Ca(CF_3SO_3)_2$.

Prinzipiell können die Kationen des Salzes (S) organisch, anorganisch oder eine Mischung daraus sein. Vorzugsweise ist das Kation des Salzes (S) ein anorganisches Kation.

Als organische Kationen kommen beispielsweise mit organischen Resten, wie beispielsweise mit $C_1$-$C_6$-Alkylresten substituierte Ammoniumkationen, wie Tetraethylammoniumkationen, in Betracht.

Als anorganische Kationen des Salzes (S) kommen vorzugsweise Kationen in Betracht, die ausgewählt werden aus der Gruppe bestehend aus Alkalimetallen, Erdalkalimetallen, Lanthanoiden, Aluminium, Ammonium ($NH_4^+$) sowie Mischungen davon, bevorzugter aus der Gruppe bestehend aus Alkalimetallen, Erdalkalimetallen, Aluminium, Ammonium sowie Mischungen davon und noch bevorzugter aus der Gruppe bestehend aus Alkalimetallen, Erdalkalimetallen, Aluminium sowie Mischungen davon. Es ist insbesondere bevorzugt, dass das Kation des Salzes (S) ausgewählt ist aus der Gruppe bestehend aus Natrium, Calcium, Aluminium, Ammonium sowie Mischungen davon.

Somit eignen sich als Salz (S) insbesondere die folgenden Verbindungen bzw. Komponenten: $Ca(NO_3)_2$ (Calciumnitrat, üblicherweise eingesetzt als $Ca(NO_3)_2$ Tetrahydrat), eine Mischung aus $Ca(NO_3)_2/HNO_3$, $KNO_3$ (Kaliumnitrat), $NaNO_3$ (Natriumnitrat), $Mg(NO_3)_2$ (Magnesiumnitrat, üblicherweise eingesetzt als $Mg(NO_3)_2$ Hexahydrat), $Al(NO_3)_3$ (Aluminiumnitrat, üblicherweise eingesetzt als $Al(NO_3)_3$ Nonahydrat), $NH_4NO_3$ (Ammoniumnitrat), $Ca(NO_2)_2$ (Calciumnitrit), NaCl (Natriumchlorid), NaBr (Natriumbromid), NaI (Natriumiodid), $Ca(CF_3SO_3)_2$ (Calciumtriflat), $Mg(CF_3SO_3)_2$ (Magnesiumtriflat), $Li(CF_3SO_3)$ (Lithiumtriflat).

Die erfindungsgemäße Härterzusammensetzung kann ein oder mehrere Salze (S) aufweisen. Die Salze können sowohl einzeln als auch im Gemisch von zwei oder mehreren der genannten Salze eingesetzt werden.

Zur Verbesserung der Löslichkeitseigenschaften des Salzes (S) in der Härterzusammensetzung kann es vorgesehen sein, dass das Salz (S) in einem geeigneten Lösemittel gelöst wird und entsprechend als Lösung eingesetzt wird. Hierfür eignen sich beispielsweise organische Lösemittel wie Methanol, Ethanol, Benzylalkohol und Glycerin. Als Lösemittel kann aber auch Wasser verwendet werden, gegebenenfalls auch in Mischung mit den vorgenannten organischen Lösemitteln. Zur Herstellung der entsprechenden Salzlösungen wird das Salz (S) in das Lösemittel gegeben und gerührt, vorzugsweise bis zur vollständigen Lösung.

Das Salz (S) ist vorzugsweise in einem Anteil von 0,1 bis 15 Gew.-% bezogen auf das Gesamtgewicht der Härterzusammensetzung in der Härterzusammensetzung enthalten. Vorzugsweise ist das Salz (S) in einem Anteil von 0,5 bis 12 Gew.-%, bevorzugter in einem Anteil 0,7 bis 10,0 Gew.-%, noch bevorzugter in einem Anteil von 1,0 bis 8,0 Gew.-% bezogen auf das Gesamtgewicht der Härterzusammensetzung in der Härterzusammensetzung enthalten.

In einer weiteren Ausführungsform umfasst die Härterzusammensetzung weitere Additive aus der Gruppe der Lösemittel, phenolische Beschleuniger, Co-Beschleuniger, Haftvermittler und anorganischen Füllstoffe.

Nicht reaktive Verdünnungsmittel (Lösungsmittel) können vorzugsweise in einer Menge bis zu 30 Gew.-% enthalten sein, bezogen auf die das Gesamtgewicht der Härterzusammensetzung, beispielsweise von 1 bis 20 Gew.-%. Beispiele für geeignete Lösungsmittel sind Alkohole, wie Methanol, Ethanol oder Glycole, Diniederalkylniederalkanoylamide wie Dimethylacetamid, Niederalkylbenzole wie Xylole oder Toluol, Phthalsäureester oder Paraffine. Vorzugsweise liegt die Menge an Lösungsmitteln bei ≤ 5 Gew.-% bezogen auf das Gesamtgewicht der Härterzusammensetzung.

Die phenolischen Beschleuniger sind vorzugsweise ausgewählt aus Salicylsäure, styrolysierten Phenolen und Cardanol, sowie Mischungen davon. Diese können in einem Anteil von 0 bis 10 Gew.-% in der Härterzusammensetzung vorliegen, bezogen auf das Gesamtgewicht der Härterzusammensetzung.

Als Co-Beschleuniger können beispielsweise Benzylalkohol, tertiäre Amine, Imidazole oder tertiäre Aminophenole, Organophosphine, Lewis-Basen oder -Säuren wie Phosphorsäureester, oder Gemische von zwei oder mehr davon verwendet werden. Die Co-Beschleuniger können auch in der Epoxidharzkomponente (A) vorliegen, soweit sie mit den Epoxidharzen verträglich sind.

Bevorzugt sind die Co-Beschleuniger in der Härterzusammensetzung in einem Gewichtsanteil von 0,001 bis 5 Gew.-% enthalten, bezogen auf das Gesamtgewicht der Härterzusammensetzung.

Beispiele für geeignete Co-Beschleuniger sind insbesondere Tris-2,4,6-dimethylaminomethylphenol, 2,4,6-Tris(dimethylamino)phenol und Bis[(dimethylamino)methyl]phenol. Ein geeignetes Co-Beschleunigergemisch enthält 2,4,6-Tris(dimethylaminomethyl)phenol und Bis(dimethylaminomethyl)phenol. Solche Gemische sind kommerziell erhältlich, beispielsweise als Ancamine® K54 (Evonik, Deutschland).

Durch den Einsatz eines Haftvermittlers wird die Vernetzung der Bohrlochwand mit der Mörtelmasse verbessert, so dass sich die Haftung im ausgehärteten Zustand erhöht. Geeignete Haftvermittler sind aus der Gruppe der Silane ausgewählt, die mindestens eine Si-gebundene hydrolisierbare Gruppe aufweisen, wie beispielsweise 3-Glycidoxypropyltrimethoxysilan, 3-Glycidoxypropyltriethoxysilan, 2-(3,4-Epoxycyclohexyl)ethyltrimethoxysilan, N-2-(Aminoethyl)-3-aminopropylmethyl-diethoxysilan, N-2-(Aminoethyl)-3-aminopropyl-triethoxysilan, 3-Aminopropyltrimethoxysilan, 3-Aminopropyltriethoxysilan, N-Phenyl-3-aminoethyl-3-aminopropyl-trimethoxysilan, 3-Mercaptopropyltrimethoxysilan und 3-Mercaptopropylmethyldimethoxysilan. Als Haftvermittler sind insbesondere 3-Aminopropyl-trimethoxysilan (AMMO), 3-Aminopropyltriethoxysilan (AMEO), 2-Aminoethyl-3-aminopropyl-trimethoxysilan (DAMO) und Trimethoxysilylpropyldiethylentetramin (TRIAMO) bevorzugt. Weitere Silane sind beispielsweise in der EP3000792 A1 beschrieben, deren Inhalt hiermit in die vorliegende Anmeldung mit aufgenommen wird.

Der Haftvermittler kann in einer Menge bis zu 10 Gew.-%, bevorzugt 0,1 bis 5 Gew.-%, weiter bevorzugt 1,0 bis 2,5 Gew.-% bezogen auf das Gesamtgewicht der Härterzusammensetzung enthalten sein.

Als Füllstoffe dienen anorganische Füllstoffe, insbesondere Zemente wie Portlandzement oder Aluminatzement sowie andere hydraulisch abbindende anorganische Stoffe, Quarz, Glas, Korund, Porzellan, Steingut, Schwerspat, Leichtspat, Gips, Talkum und/oder Kreide sowie deren Mischungen. Des Weiteren können auch Verdicker wie pyrogene Kieselsäure als anorganischer Füllstoff verwendet werden. Als Füllstoffe kommen insbesondere nicht oberflächenbehandelte Quarzmehle, Feinquarzmehle und Feinstquarzmehle, wie beispielsweise Millisil W3, Millisil W6, Millisil W8 und Millisil W12, bevorzugt Millisil W12, in Frage. Ferner können silanisierte Quarzmehle, Feinquarzmehle und Feinstquarzmehl eingesetzt werden. Diese sind beispielsweise käuflich unter der Produktserie Silbond der Firma Quarzwerke erhältlich. Hierbei sind die Produktserien Silbond EST (Epoxysilanmodifiziert) und Silbond AST (aminosilanbehandelt) besonders bevorzugt. Ferner können Aluminiumoxid basierte Füllstoffe wie beispielsweise Aluminiumoxidfeinstfüller vom Typ ASFP der Firma Denka, Japan, ($d_{50}$ = 0,3 μm) oder Qualitäten wie DAW oder DAM mit den Typenbezeichnungen 45 ($d_{50}$ < 0,44 μm), 07 ($d_{50}$ > 8,4μm), 05 ($d_{50}$ < 5,5 μm), 03 ($d_{50}$ < 4,1 μm). Weiterhin können die oberflächenbehandelten Fein- und Feinstfüllstoffe vom Typ Aktisil AM (aminosilanbehandelt, $d_{50}$ = 2,2 μm) und Aktisil EM (epoxysilanbehandelt, $d_{50}$ = 2,2 μm) von Hoffman Mineral verwendet werden.

Die anorganischen Füllstoffe können in Form von Sanden, Mehlen oder Formkörpern, vorzugsweise in Form von Fasern oder Kugeln, zugesetzt werden. Die Füllstoffe können in einer oder in allen Komponenten des später beschriebenen Mehrkomponenten-Epoxidharzsystems vorhanden sein. Durch eine geeignete Auswahl der Füllstoffe hinsichtlich Art und Korngrößenverteilung/(Faser)länge können applikationsrelevante Eigenschaften, wie rheologisches Verhalten, Auspresskräfte, innere Festigkeit, Zugfestigkeit, Auszugskräfte und Schlagzähigkeit gesteuert werden.

Der Anteil an Füllstoffen beträgt vorzugsweise 0 bis 75 Gew.-%, beispielsweise 10 bis 75 Gew.-%, bevorzugt 15 bis 75 Gew.-% und weiter bevorzugt 20 bis 50 Gew.-%, noch weiter bevorzugt 25 bis 40 Gew.-%, bezogen auf das Gesamtgewicht der Härterzusammensetzung.

Gegenstand der vorliegenden Erfindung ist ferner eine Epoxidharzmasse, die mindestens ein härtbares Epoxidharz und eine Härterzusammensetzung wie zuvor beschrieben umfasst. Bevorzugt handelt es sich bei der Epoxidharzmasse um eine Mehrkomponenten-Epoxidharzmasse, bevorzugt um eine Zweikomponenten-Epoxidharzmasse.

Als härtbares Epoxidharz kommt eine Vielzahl der hierfür dem Fachmann bekannten und kommerziell erhältlichen Verbindungen in Betracht, die im Mittel mehr als eine Epoxid-Gruppe, vorzugsweise zwei Epoxid-Gruppen, pro Molekül enthalten. Diese Epoxidharze können sowohl gesättigt als auch ungesättigt sowie aliphatisch, alicyclisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Ethergruppen und ähnliche. Im Rahmen der Erfindung sind auch trimere und tetramere Epoxide geeignet.

Vorzugsweise handelt es sich bei den Epoxidharzen um Glycidylether, die sich von mehrwertigen Alkoholen, insbesondere von mehrwertigen Phenolen wie beispielsweise Bisphenolen und Novolaken, ableiten, insbesondere solchen mit einer durchschnittlichen Glycidylgruppenfunktionalität von 1,5 oder größer, insbesondere von 2 oder größer, beispielsweise von 2 bis 10.

Die Epoxidharze können ein Epoxyäquivalentgewicht (EEW) von 120 bis 2000 g/EQ aufweisen, vorzugsweise von 140 bis 400, insbesondere 155 bis 195, beispielsweise 165 bis 185 aufweisen. Es können auch Mischungen mehrerer Epoxidharze verwendet werden.

Beispiele für die zur Herstellung der Epoxidharze eingesetzten mehrwertige Phenole sind Resorcin, Hydrochinon, 2,2-Bis-(4-Hydroxyphenyl)-propan (Bisphenol A), Isomerengemische des Dihydroxyphenylmethans (Bisphenol F), Tetrabrom-Bisphenol A, Novolake, 4,4'-Dihydroxyphenylcyclohexan und 4,4'-Dihydroxy-3,3'-dimethyldiphenylpropan.

Bevorzugt ist das Epoxidharz ein Diglycidylether von Bisphenol A oder von Bisphenol F oder einem Gemisch davon. Besonders bevorzugt werden flüssige Diglycidylether auf Basis von Bisphenol A und/oder F mit einem EEW von 150 bis 300 g/EQ verwendet.

Weitere Beispiele sind Hexandioldiglycidylether, Trimethylolpropan-triglycidylether, Bisphenol-A-Epichlorhydrinharze und/oder Bisphenol-F-Epichlorhydrinharze, beispielsweise mit einem durchschnittlichen Molekulargewicht von Mn ≤ 2000 g/mol.

Ein weiterer Gegenstand der vorliegenden Erfindung ist ein Mehrkomponenten-Epoxidharzsystem umfassend eine Epoxidharzkomponente (A) und eine Härterkomponente, wobei die Epoxidharzkomponente (A) ein härtbares Epoxidharz enthält, und die Härterkomponente eine Aminmischung mit 5 bis 50 Gew.-% Diaminomethylcyclohexan und mindestens 25 Gew.-% 1,3-Cyclo-hexan-bis(methylamin) bezogen auf das Gesamtgewicht der Aminmischung umfasst und wobei mindestens ein Salz (S) ausgewählt aus Salzen der Salpetersäure, Salzen der Salpetrigen Säure, Salzen der Halogene, Salzen der Trifluormethansulfonsäure und Kombinationen davon in der Epoxidharzkomponente (A) und/oder in der Härterkomponente enthalten ist. Bevorzugt ist das Mehrkomponenten-Epoxidharzsystem ein Zweikomponenten-Epoxidharzsystem.

Für das härtbare Epoxidharz, die Aminmischung und das Salz (S) des Mehrkomponenten-Epoxidharzsystems gelten die vorstehenden Ausführungen.

Das als Beschleuniger eingesetzte Salz (S) kann in der Epoxidharzkomponente (A) oder in der Härterkomponente oder sowohl in der Epoxidharzkomponente (A) als auch in der Härterkomponente enthalten sein. Es ist bevorzugt, dass das Salz (S) mindestens in der Härterkomponente, bevorzugt nur in der Härterkomponente, enthalten ist. In diesem Fall kommt im Mehrkomponenten-Epoxidharzsystem die zuvor beschriebene Härterzusammensetzung zum Einsatz.

Der Anteil an Epoxidharz an der Epoxidharzkomponente (A) beträgt >0 bis 100 Gew.-%, bevorzugt 10 bis 70 Gew.-% und besonders bevorzugt 30 bis 60 Gew.-%, bezogen auf das Gesamtgewicht der Epoxidharzkomponente (A).

Die Epoxidharzkomponente (A) kann wahlweise mindestens einen Reaktivverdünner enthalten. Als Reaktivverdünner werden Glycidylether von aliphatischen, alicyclischen oder aromatischen Mono- oder insbesondere Polyalkoholen verwendet, die eine geringere Viskosität als aromatische Gruppen enthaltende Epoxide aufweisen. Beispiele für Reaktivverdünner sind Monoglycidylether, z.B. o-Kresylglycidylether, Dodecylglycidylether oder Tetradecylglycidylether, und Glycidylether mit einer Epoxid-Funktionalität von mindestens 2, wie 1,4-Butandioldiglycidylether (BDDGE), Cyclohexandimethanoldiglycidylether und Hexandioldiglycidylether, Resorcinoldiglycidylether, Neopentylglycoldiglycidylether, Butadiendioxid, Divinylbenzoldioxide, Diglycidylether, , Vinylcyclohexendioxid, Diethylenglycoldiglycidylether, sowie Tri- oder höhere Glycidylether, wie Glycerintriglycidylether, Pentaerythrittetraglycidylether, Trimethylolpropantriglycidylether (TMPTGE) oder Trimethylolethantriglycidylether (TMETGE), wobei Trimethylolethantriglycidylether bevorzugt ist. Es können auch Mischungen von zwei oder mehr dieser Reaktivverdünner verwendet werden, vorzugsweise Triglycidylether enthaltende Mischungen, besonders bevorzugt als Gemisch aus 1,4-Butandioldiglycidylether (BDDGE) und Trimethylolpropantriglycidylether (TMPTGE) oder 1,4-Butandioldiglycidylether (BDDGE) und Trimethylolethantriglycidylether (TMETGE).

Die Reaktivverdünner liegen bevorzugt in einer Menge von 0 bis 60 Gew.-% vor, insbesondere von 1 bis 20 Gew.-%, bezogen auf das Gesamtgewicht der Epoxidharzkomponente (A).

Der Anteil der Epoxidharzkomponente (A) an der Gesamtmasse des Mehrkomponenten-Epoxidharzsystems beträgt vorzugsweise 5 bis 90 Gew.-%, insbesondere 20 bis 80 Gew.-%, 30 bis 70 Gew.-% oder 40 bis 60 Gew.-%.

Geeignete Epoxidharze und Reaktivverdünner sind auch in dem Standardwerk von Michael Dornbusch, Ulrich Christ und Rob Rasing, "Epoxidharze", Vincentz Network GmbH & Co KG (2015), ISBN 13: 9783866308770, zu finden. Diese Verbindungen werden hier durch Bezugnahme aufgenommen.

Des Weiteren kann die Epoxidharzkomponente (A) übliche Zusätze enthalten, insbesondere Haftvermittler und Füllstoffe, wie bereits für die Härterzusammensetzung beschrieben.

Der Haftvermittler kann in einer Menge bis zu 10 Gew.-%, bevorzugt 0,1 bis 5 Gew.-%, besonders bevorzugt 1,0 bis 5,0 Gew.-%, bezogen auf das Gesamtgewicht der Epoxidharzkomponente (A), enthalten sein.

Der Anteil an Füllstoffen beträgt vorzugsweise 0 bis 75 Gew.-%, beispielsweise 10 bis 75 Gew.-%, bevorzugt 15 bis 75 Gew.-% und weiter bevorzugt 20 bis 50 Gew.-%, noch weiter bevorzugt 25 bis 40 Gew.-%, bezogen auf das Gesamtgewicht der Epoxidharzkomponente (A).

Weitere denkbare Zusätze zur Epoxidharzkomponente (A) sind ferner Thixotropiermittel wie gegebenenfalls organisch nachbehandelte pyrogene Kieselsäure, Bentonite, Alkyl- und Methylcellulosen und Rhizinusölderivate, Weichmacher wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze wie Farbstoffe oder Pigmente, beispielsweise zum unterschiedlichen Anfärben der Komponenten zur besseren Kontrolle von deren Durchmischung, ebenso wie Netzmittel, Phlegmatisiermittel, Dispergiermittel und weitere Steuerungsmittel für die Reaktionsgeschwindigkeit, oder Gemische von zwei oder mehreren davon.

Das Mehrkomponenten-Epoxidharzsystem liegt vorzugsweise in Patronen, Kartuschen oder Folienbeuteln vor, die dadurch gekennzeichnet sind, dass sie zwei oder mehrere voneinander getrennte Kammern umfassen, in welchen die Epoxidharzkomponente (A) und die Härterkomponente, bevorzugt die Härterzusammensetzung (B), reaktionsinhibierend voneinander getrennt angeordnet sind.

Zur bestimmungsgemäßen Anwendung des Mehrkomponenten-Epoxidharzsystems werden die Epoxidharzkomponente (A) und die Härterkomponente aus den getrennten Kammern entleert und in einer geeigneten Vorrichtung, beispielsweise einem Statikmischer oder einem Dissolver, gemischt. Die Mischung aus Epoxidharzkomponente (A) und Härterkomponente wird danach mittels einer bekannten Injektionsvorrichtung in das zuvor gereinigte Bohrloch eingebracht. Anschließend wird das zu fixierende Bauteil in die Mörtelmasse eingesetzt und justiert. Die reaktiven Bestandteile der Härterkomponente reagieren mit den Epoxidharzen der Harzkomponente (A) unter Polyaddition, sodass die Epoxidharzmasse unter Umgebungsbedingungen innerhalb einer gewünschten Zeit, vorzugsweise innerhalb weniger Minuten oder Stunden, aushärtet.

Die Komponenten A und B werden bevorzugt in einem Verhältnis gemischt, das entsprechend der EEW- und AHEW-Werte eine ausgeglichene Stöchiometrie ergibt.

Der AHEW-Wert (*amine hydrogen equivalent weight,* H-Äquivalent) gibt die Menge der Härterzusammensetzung an, die 1 mol reaktives H enthält Die Bestimmung des AHEW erfolgt in für den Fachmann bekannter Weise anhand der Formulierung der Reaktionsmischung aus den bekannten H-Äquivalenten der verwendeten Edukte und Rohstoffe, aus denen sie errechnet werden.

Am Beispiel von meta-Xylylendiamin ($M_W$ = 136 g/mol, Funktionalität = 4 eq/mol) ist die Errechnung des AHEW nachfolgend exemplarisch erläutert:

$$\text{Allgemeine Formel:}\ AHEW = \frac{M_W}{Funktionalität} = \frac{136}{4}\left[\frac{g}{eq}\right] = 34\left[\frac{g}{eq}\right]$$

Die EEW (*epoxide equivalent weight,* Epoxidäquivalentwerte) werden in der Regel von den Herstellern der jeweils verwendeten Epoxidharzkomponenten angegeben oder sie werden nach bekannten Methoden berechnet. Die EEW geben die Menge in g Epoxidharz an, die 1 Mol Epoxidgruppen enthält.

Experimentell wurde die AHEW durch Bestimmung der Glasübergangstemperatur (Tg) einer Mischung aus Epoxidharz (mit bekanntem EEW) und Aminkomponente erhalten. Es wurden dabei die Glasübergangstemperaturen von Epoxidharz/Amin-Mischungen mit unterschiedlichen Verhältnissen bestimmt. Die Probe wurde mit einer Heizrate von -20 K/min von 21 auf -70°C abgekühlt, in einem ersten Heizlauf auf 250°C erwärmt (Heizrate 10 K/min), anschließend wieder auf -70°C gekühlt (Heizrate -20 K/min) und im letzten Schritt auf 200°C erwärmt (Heizrate 20 K/min). Die Mischung mit der höchsten Glasübergangstemperatur im zweiten Heizlauf ("$T_g2$") besitzt das optimale Verhältnis von Epoxidharz und Amin. Aus dem bekannten EEW und dem optimalen Epoxidharz/Amin-Verhältnis lässt sich der AHEW-Wert berechnen.

Beispiel: EEW = 158 g/mol

Mischung Amin/Epoxidharz mit maximaler $T_g2$: 1 g Amin mit 4,65 g Epoxidharz

$$AHEW = \frac{1}{4,65} \cdot 158 = 34 \left[\frac{g}{eq}\right]$$

Die erfindungsgemäße Epoxidharzmasse bzw. das erfindungsgemäße Mehrkomponenten-Epoxidharzsystem wird bevorzugt für Bauzwecke eingesetzt. Der Begriff "für Bauzwecke" bedeutet das Baukleben von Beton/Beton, Stahl/Beton oder Stahl/Stahl oder einer der genannten Materialien auf anderen mineralischen Materialien, die strukturelle Verstärkung von Bauteilen aus Beton, Mauerwerk und anderen mineralischen Materialien, die Armierungsanwendungen mit faserverstärkten Polymeren von Bauobjekten, die chemische Befestigung auf Oberflächen aus Beton, Stahl oder anderen mineralischen Materialien, insbesondere die chemische Befestigung von Konstruktionselementen und Verankerungsmitteln, wie Ankerstangen, Ankerbolzen, (Gewinde)stangen, (Gewinde)hülsen, Betoneisen, Schrauben und dergleichen, in Bohrlöchern in verschiedenen Untergründen, wie (Stahl)beton, Mauerwerk, anderen mineralischen Materialien, Metallen (z.B. Stahl), Keramiken, Kunststoffen, Glas und Holz. Ganz besonders bevorzugt dienen die erfindungsgemäßen Epoxidharzmassen und die erfindungsgemäßen Mehrkomponenten-Epoxidharzsysteme zur chemischen Befestigung von Verankerungsmitteln.

Ein weiterer Gegenstand der vorliegenden Erfindung ist ein Verfahren zur chemischen Befestigung von Konstruktionselementen in Bohrlöchern, wobei zur chemischen Befestigung der Konstruktionselemente eine erfindungsgemäße Epoxidharzmasse oder ein erfindungsgemäßes Mehrkomponenten-Epoxidharzsystem, wie zuvor beschrieben verwendet wird. Das erfindungsgemäße Verfahren eignet sich insbesondere zum Baukleben von Beton/Beton, Stahl/Beton oder Stahl/Stahl oder einer der genannten Materialien auf anderen mineralischen Materialien, die strukturelle Verstärkung von Bauteilen aus Beton, Mauerwerk und anderen mineralischen Materialien, die Armierungsanwendungen mit faserverstärkten Polymeren von Bauobjekten, die chemische Befestigung auf Oberflächen aus Beton, Stahl oder anderen mineralischen Materialien, insbesondere die chemische Befestigung von Konstruktionselementen und Verankerungsmitteln, wie Ankerstangen, Ankerbolzen, (Gewinde)stangen, (Gewinde)hülsen, Betoneisen, Schrauben und dergleichen, in Bohrlöchern in verschiedenen Untergründen, wie (Stahl)beton, Mauerwerk, anderen mineralischen Materialien, Metallen (z.B. Stahl), Keramiken, Kunststoffen, Glas und Holz. Ganz besonders bevorzugt dient das erfindungsgemäße Verfahren zur chemischen Befestigung von Verankerungsmitteln.

Ein weiterer Gegenstand der vorliegenden Erfindung ist die Verwendung einer Aminmischung enthaltend 5 bis 50 Gew.-% Diaminomethylcyclohexan und mindestens 25 Gew.-% 1,3-Cyclo-hexan-bis(methyl-amin) bezogen auf das Gesamtgewicht der Aminmischung in einer Härterzusammensetzung für eine Epoxidharzmasse zur Verbesserung der Auszugsfestigkeiten bei hohen Temperaturen, insbesondere bei 80 °C sowie in wassergefüllten Bohrlöchern.

Die Verwendung einer Aminmischung enthaltend 5 bis 50 Gew.-% Diaminomethylcyclohexan und mindestens 25 Gew.-% 1,3-Cyclo-hexan-bis(methylamin) in einer Härterzusammensetzung für eine Epoxidharzmasse, ermöglicht es, die Aushärtezeit der Epoxidharzmasse erheblich zu verkürzen und ferner eine ausreichende Auszugsfestigkeit bereits nach vier bis sechs Stunden zu gewährleisten. Ferner weisen die gehärteten Epoxidharzmassen eine hervorragende Auszugsfestigkeit bei erhöhten Temperaturen und im wassergefüllten Bohrloch auf.

Weitere Vorteile der Erfindung ergeben sich aus der nachfolgenden Beschreibung von bevorzugten Ausführungsbeispielen, die jedoch in keiner Weise als einschränkend zu verstehen sind. Alle Ausführungsformen der Erfindung können im Rahmen der Erfindung miteinander kombiniert werden.

## AUSFÜHRUNGSBEISPIELE

Epoxidharzkomponente **(A)**

Ausgangsmaterialien

Als Epoxidharze wurden in den Beispielen die im Handel unter den Bezeichnungen Araldite GY 240 und Araldite GY 282 (Huntsman) erhältlichen Bisphenol A-basierten beziehungsweise Bisphenol F-basierten Epoxidharze verwendet.

Als Reaktivverdünner wurden die im Handel unter den Bezeichnungen Araldite DY-206 und Araldite™ DY-T (Huntsman) erhältlichen 1,4-Butandiol-diglycidylether und Trimethyolpropan-triglycidylether verwendet.

Als Haftvermittler wurde 3-Glycidyloxypropyl-trimethoxysysilan erhältlich unter der Bezeichnung Dynalsylan GLYMO™ (Evonik Industries) verwendet.

Die flüssigen Komponenten wurden per Hand vorgemischt. Anschließend wurden als Füllstoff Quarz (Millisil™ W12 der Firma Quarzwerke Frechen) und als Verdicker pyrogene Kieselsäure (Cab-O-Sil™ TS- 720 der Firma Cabot Rheinfelden) zugegeben und die Mischung im Dissolver (PC Laborsystem, Volumen 1L) 10 min lang bei einem Unterdruck von 80 mbar bei 3500 U/min gerührt.

Die Zusammensetzung der in den Beispielen und Vergleichsbeispielen verwendeten Epoxidharzkomponente A ist in der nachfolgenden Tabelle 1 angegeben.

Tabelle 1: Zusammensetzung der Epoxidharzkomponente A in Gew.-% (EEW 236 g/EQ)

| Stoff | Funktion | Gew.-% |
|---|---|---|
| 3-Glycidyloxypropyltrimethoxysilan | Haftvermittler | 2,8 |
| Bisphenol A-basiertes Epoxidharz | Epoxidharz | 33,8 |
| Bisphenol F-basiertes Epoxidharz | Epoxidharz | 18,2 |
| 1,4-Butanediol-diglycidyl ether | Reaktivverdünner | 6,5 |
| Trimethyolpropan-triglycidylether | Reaktivverdünner | 6,5 |
| Quarzmehl | Füllstoff | 29,7 |
| Kieselsäure | Verdicker | 2,5 |

**Härterzusammensetzung (B)**

Ausgangsmaterialien

Als Amine wurden 1,3-Cyclohexandimethanamin (1,3-BAC) und m-Xylylendiamin (mXDA) der Firma MGC, Japan sowie ein Stereoisomerengemischs von Diaminomethylcyclohexan (MDACH, Baxxodur EC 210) der Firma BASF SE, Deutschland zur Herstellung der Härterzusammensetzung (B) verwendet. Zur Synthese der nachstehenden Amin-Addukte wurde ferner Bisphenol-A-diglycidylether (BADGE, Araldite GY 240) der Firma Huntsman verwendet.

Synthese BADGE/ MDACH Addukt

58,75 g Baxxodur EC 210 und 41,25 g Araldite GY 240 wurden bei Raumtemperatur zusammengegeben und 24 h gerührt. Es wurde eine Lösung des MDACH-BADGE-Addukts in MDACH erhalten.

Synthese BADGE/mXDA Addukt

60,21 g m-Xylylendiamin und 39,79 g Araldite GY 240 wurden bei Raumtemperatur zusammengegeben und 24 h gerührt. Es wurde eine Lösung des mXDA-BADGE-Addukts in mXDA erhalten.

Als Füllstoff wurde Quarz (Millisil™ W12 der Firma Quarzwerke Frechen) und als Verdicker pyrogene Kieselsäure (Cab-O-Sil™ TS-720 der Firma Cabot Rheinfelden) verwendet.

Zur Herstellung der in der Härterzusammensetzung B verwendeten Salze (S) bzw. Beschleuniger wurden die in der nachfolgenden Tabelle 2 angegebenen Bestandteile verwendet.

**Tabelle 2:** Liste der verwendeten Salze und Beschleunigerbestandteile (Beispiele und Vergleichsbeispiele)

| Salz (S) bzw. Beschleuniger | Handelsname | Hersteller |
|---|---|---|
| Calciumnitrat | Calciumnitrat-Tetrahydrat | Sigma-Aldrich |
| Calciumtriflat | Calciumtrifluoromethansulfonat | Sigma-Aldrich |
| 2,4,6-Tris(dimethylaminomethyl)phenol, Bis[(dimethylamino)methyl]phenol | Ancamine K54 | Evonik |
| Phenol-Novolak | Phenolite TD-2131 | DIC Europe |

Das Salz Calciumnitrat wurden als Lösung in Glycerin (1,2,3-Propantriol, CAS-Nr. 56-81-5, Merck, D) eingesetzt. Dazu wurden 400,0 g Calciumnitrat-Tetrahydrat zu 100 g Glycerin gegeben und bei 50 °C bis zur vollständigen Lösung (ca. 3 Stunden) gerührt. Die so hergestellte Lösung enthielt 80,0 % Calciumnitrat-Tetrahydrat.

Calciumtriflat wurde als Feststoff im Amin des jeweiligen Härters gelöst.

Zur Herstellung der Härterzusammensetzungen (B) wurden die flüssigen Komponenten gemischt. Das Salz wurde hinzugegeben und anschließend wurden Quarzmehl und Kieselsäure zugegeben und im Dissolver (PC Laborsystem, Volumen 1L) bei einem Unterdruck von 80 mbar bei 3500 U/min für 10 min gerührt.

Die Zusammensetzung der so hergestellten Härterzusammensetzungen (B) ist in den nachfolgenden Tabelle 3 (erfindungsgemäß) und in Tabelle 4 (Vergleichsbeispiele) angegeben.

**Tabelle 3:** Zusammensetzung der Härterzusammensetzungen (B) in Gew.-% (Beispiele 1 bis 8)

| | Beispiel | 1 | 2 | 3 | 4 | 5 | 6 | 7 | 8 |
|---|---|---|---|---|---|---|---|---|---|
| Amin | MDACH | 11,7 | 12,0 | 6,2 | 4,2 | 4,2 | 16,0 | 7,6 | - |
| | 1,3-BAC | 23,4 | 28,0 | 14,5 | 37,3 | 33,1 | 12,0 | 17,3 | 15,6 |
| | mXDA | 3,9 | - | 20,8 | - | 4,2 | 12,0 | 7,9 | 18,0 |
| Amin-Addukt | mXDA-BADGE-Addukt (in MXDA) | - | - | - | - | - | - | 24,2 | - |
| | MDACH-BADGE-Addukt (in MDACH) | - | - | - | - | - | - | - | 23,4 |
| Salz (S)/ Beschleuniger | Calciumnitrat | 5,0 | - | 2,5 | 2,5 | 2,5 | - | 1,9 | 1,9 |
| | Calciumtriflat | - | 4,0 | - | - | - | 4,0 | - | - |
| | Ancamin K54 | 2,4 | 2,4 | 2,4 | 2,4 | 2,4 | 2,4 | 2,4 | 2,4 |
| | Quarz | 49,6 | 49,6 | 49,6 | 49,6 | 49,6 | 49,6 | 36,7 | 36,7 |
| | Verdicker | 4,0 | 4,0 | 4,0 | 4,0 | 4,0 | 4,0 | 2,0 | 2,0 |
| | **AHEW [g/Eq]** | **88** | **86** | **82** | **85** | **84** | **84** | **75** | **74** |

**Tabelle 4:** Zusammensetzung der Härterzusammensetzungen (B) in Gew.-% (Vergleichsbeispiele 1 bis 4)

| | Vergleichsbeispi el | 1 | 2 | 3 | 4 |
|---|---|---|---|---|---|
| Amin | MDACH | - | 2,1 | 23,4 | 13,2 |
| | 1,3-BAC | 21,0 | 8,3 | 15,6 | 26,4 |
| | mXDA | 21,1 | 31,1 | - | 4,4 |
| Salz (S)/ Beschleuniger | Calciumnitrat | 1,9 | 2,5 | 5,0 | - |
| | Ancamin K54 | 2,4 | 2,4 | 2,4 | 2,4 |
| | Phenol-Novolak | - | - | - | 14,0 |
| | Quarz | 49,6 | 49,6 | 49,6 | 36,1 |
| | Verdicker | 4,0 | 4,0 | 4,0 | 3,5 |
| | **AHEW [g/Eq]** | **83** | **82** | **86** | **78** |

**Mörtelmassen und Auszugsversuche**

Die Epoxidharzkomponente (A) und die Härterzusammensetzung (B) wurden in einem Speedmixer in einem Verhältnis gemischt, das entsprechend der EEW- und AHEW-Werte eine ausgeglichene Stöchiometrie ergab. Das Gemisch wurde möglichst blasenfrei in eine 1K-Kartusche gefüllt und sofort in das für die Auszugsversuche präparierte Bohrloch injiziert.

Die Auszugsfestigkeit der durch Mischen der Epoxidharzkomponente (A) und Härterzusammensetzung (B) gemäß den oben angegebenen Beispielen erhaltenen Mörtelmassen wurden unter Verwendung einer hochfesten Ankergewindestange M12 gemäß ETAG 001 Part 5 bestimmt, die in ein hammergebohrtes Bohrloch mit einem Durchmesser von 14 mm und einer Bohrlochtiefe von 62 mm mit der jeweiligen Mörtelmasse in C20/25 Beton eingedübelt wurde. Die Bohrlöcher nach der für den jeweiligen Auszugsversuch spezifischen Methode gereinigt.

Die Bohrlöcher wurden vom Bohrgrund her mit der jeweils zu prüfenden Mörtelmasse zu zwei Dritteln befüllt. Die Gewindestange wurde von Hand eingedrückt. Der Mörtelüberschuss wurde mittels eines Spachtels entfernt.

Die Versagenslast wurde durch zentrisches Ausziehen der Ankergewindestange mit enger Abstützung ermittelt. Die mit den Mörtelmassen unter Verwendung einer Härterzusammensetzung (B) gemäß den Beispielen 1 bis 7 und den Vergleichsbeispielen 1 bis 4 erhaltenen Lastwerte sind der folgenden Tabelle 5 zu entnehmen.

Es wurden die folgenden Arten von Auszugsversuchen durchgeführt.

| **R1:** | Trockener Beton; |
| | Hammergebohrt; |
| | Reinigung:     zweimal Ausblasen mit Druckluft (6 bar), zweimal Bürsten und anschließend nochmals zweimal Ausblasen mit Druckluft (6 bar); |
| | Einbindetiefe: 60 mm; |
| | Aushärtung 24 Stunden bei 22 °C; |

**B5 (6 std.):** Trockener Beton

Hammergebohrt

Reinigung:     zweimal Ausblasen mit Druckluft (6 bar), zweimal Bürsten und anschließend nochmals zweimal Ausblasen mit Druckluft (6 bar);

Einbindetiefe 60 mm

Aushärtung 6 h bei 22°C

**B3, 80 °C:** Trockener Beton;

Hammergebohrt;

Reinigung:     zweimal Ausblasen mit Druckluft (6 bar), zweimal Bürsten und anschließend nochmals zweimal Ausblasen mit Druckluft (6 bar);

Einbindetiefe: 60 mm;

Aushärtung 24 Stunden bei 22 °C, anschließend Lagerung bei 80 °C für 48 Stunden;

Auszug der Ankerstange bei $80 \pm 2$ °C;

**B8:** Wassergesättigter Beton;

Hammergebohrt;

Reinigung:     einmal Ausblasen mit Druckluft (6 bar), einmal Bürsten und anschließend nochmals einmal Ausblasen mit Druckluft (6 bar);

Injektion:     über Mischerverlängerung mit Stauzapfen in das wassergefüllte Bohrloch;

Einbindetiefe     60 mm

Aushärtung     48 Stunden bei 22 °C.

Um eine Bewertung der Mörtelmassen unter schwierigen Bedingungen wie Versagenslast bei erhöhter Temperatur und nach Applikation im wassergefüllten Bohrloch vornehmen zu können, wird im Allgemeinen der Quotient aus Versagenslast unter schwierigen Bedingungen (B3 80°C, B8) und Versagenslast im Referenzbohrloch (trockenes, gereinigtes Bohrloch, bei Raumtemperatur) gebildet. Das Ergebnis ist der prozentuale Anteil der Referenzlast, der unter schwierigen Bedingungen bleibt. Die entsprechenden Ergebnisse sind in der nachfolgenden Tabelle dargestellt.

**Tabelle 5:** Bestimmung der Lastwerte der erfindungsgemäßen Beispiele 1 bis 8

| | | Beispiele | | | | | | | |
|---|---|---|---|---|---|---|---|---|---|
| | | 1 | 2 | 3 | 4 | 5 | 6 | 7 | 8 |
| Auszugsversuche | Versuch Nummer | Lastwert [N/mm$^2$] | | | | | | | |
| R1 | 1 | 34,6 | 33,1 | 35,6 | 34,4 | 33,9 | 33,1 | 34,6 | 37,2 |
| B5 (6 Std.) | 2 | 29,2 | n.b. | n.b. | n.b. | n.b. | n.b. | n.b. | n.b. |
| B3 80 °C | 3 | 29,8 | 28,1 | 28,9 | 27,9 | 27,1 | 28,1 | 28,7 | n.b. |
| B8 | 4 | 19,9 | 19,0 | 18,9 | 17,5 | 19,0 | 17,1 | 20,4 | 23,1 |
| | | Prozentualer Anteil Referenzlast | | | | | | | |
| B3 80 °C/ R1 | | 86% | 85% | 81% | 81% | 80% | 85% | 83% | n.b. |
| B8/ R1 | | 58% | 57% | 53% | 51% | 56% | 52% | 59% | 62% |

**Tabelle 6:** Bestimmung der Lastwerte der Vergleichsbeispiele 1 bis 4

| | | Beispiele | | | |
|---|---|---|---|---|---|
| | | 1 | 2 | 3 | 4 |
| Auszugsversuche | Versuch Nummer | Lastwert [N/mm$^2$] | | | |
| R1 | 1 | 33,3 | 33,9 | 34,5 | 32,7 |
| B5 (6 Std.) | 2 | n.b. | n.b. | n.b. | 19,7 |
| B3 80 °C | 3 | 27,3 | 28,6 | 29,8 | 25,8 |
| B8 | 4 | 15,5 | 16,5 | 14,3 | 14,6 |
| | | Prozentualer Anteil Referenzlast | | | |
| B3 80 °C/ R1 | | 82% | 84% | 86% | 79% |
| B8/ R1 | | 47% | 49% | 41% | 45% |

**Patentansprüche**

1. Härterzusammensetzung umfassend eine Amimischung und ein mindestens ein Salz (S) als Beschleuniger, wobei das als Beschleuniger verwendete Salz (S) aus der Gruppe bestehend aus Salzen der Salpetersäure, Salzen der Salpetrigen Säure, Salzen der Halogene, Salzen der Trifluormethansulfonsäure und Kombinationen davon ausgewählt wird, **dadurch gekennzeichnet, dass** die Aminmischung 5 bis 50 Gew.-% Diaminomethylcyclohexan und mindestens 25 Gew.-% 1,3-Cyclo-hexan-bis(methyl-amin) bezogen auf das Gesamtgewicht der Aminmischung umfasst.

2. Härterzusammensetzung gemäß Anspruch 1, **dadurch gekennzeichnet, dass** die Aminmischung 25 bis 95 Gew.-% 1,3-Cyclo-hexan-bis(methyl-amin) bezogen auf das Gesamtgewicht der Aminmischung umfasst.

3. Härterzusammensetzung gemäß Anspruch 1 oder 2, **dadurch gekennzeichnet, dass** die Aminmischung zusätzlich 1,3-Benzoldimethanamin umfasst.

4. Härterzusammensetzung gemäß Anspruch 3, **dadurch gekennzeichnet, dass** die Aminmischung ≤ 55 Gew.-% 1,3-Benzoldimethanamin bezogen auf das Gesamtgewicht der Aminmischung umfasst.

5. Härterzusammensetzung gemäß einem der vorhergehenden Ansprüche, **dadurch gekennzeichnet, dass** die Aminmischung in einem Anteil von 30 bis 98 Gew.-% bezogen auf das Gesamtgewicht der Härterzusammensetzung in der Härterzusammensetzung enthalten ist.

6. Härterzusammensetzung gemäß einem der vorhergehenden Ansprüche, **dadurch gekennzeichnet, dass** das Salz (S) in einem Anteil von 0,1 bis 15 Gew.-% bezogen auf das Gesamtgewicht der Härterzusammensetzung in der Härterzusammensetzung enthalten ist.

7. Härterzusammensetzung gemäß einem der vorhergehenden Ansprüche, **dadurch gekennzeichnet, dass** die Aminmischung 5 bis 50 Gew.-% Diaminomethylcyclohexan, 30 bis 80 Gew.-% 1,3-Cyclo-hexan-bis(methyl-amin) und 10 bis 55 Gew.-% 1,3-Benzoldimethanamin jeweils bezogen auf das Gesamtgewicht der Aminmischung umfasst.

8. Härterzusammensetzung gemäß einem der vorhergehenden Ansprüche, **dadurch gekennzeichnet, dass** das Salz (S) ausgewählt ist aus der Gruppe bestehend aus Nitrat ($NO_3^-$), Iodid ($I^-$), Triflat ($CF_3SO_3^-$) sowie Kombinationen davon.

9. Härterzusammensetzung gemäß einem der vorhergehenden Ansprüche, **dadurch gekennzeichnet, dass** das Salz (S) ein Kation ausgewählt aus der Gruppe bestehend aus Alkalimetallen, Erdalkalimetallen, Lanthanoiden, Aluminium, Ammonium und Kombinationen davon umfasst.

10. Epoxidharzmasse enthaltend mindestens ein härtbares Epoxidharz und eine Härterzusammensetzung gemäß einem der vorhergehenden Ansprüche.

**11.** Mehrkomponenten-Epoxidharzsystem umfassend eine Epoxidharzkomponente (A) und eine Härterkomponente, wobei die Epoxidharzkomponente (A) ein härtbares Epoxidharz enthält und die Härterkomponente eine Aminmischung umfasst, wobei ein Salz (S) ausgewählt aus Salzen der Salpetersäure, Salzen der Salpetrigen Säure, Salzen der Halogene, Salzen der Trifluormethansulfonsäure und Kombinationen davon in der Epoxidharzkomponente (A) und/oder in der Härterkomponente enthalten ist, **dadurch gekennzeichnet, dass** die Aminmischung 5 bis 50 Gew.-% Diaminomethylcyclohexan und mindestens 25 Gew.-% 1,3-Cyclo-hexan-bis(methyl-amin) bezogen auf das Gesamtgewicht der Aminmischung enthält.

**12.** Mehrkomponenten-Epoxidharzsystem gemäß Anspruch 11, **dadurch gekennzeichnet, dass** das Salz (S) in der Härterkomponente enthalten ist.

**13.** Verfahren zur chemischen Befestigung von Konstruktionselementen in Bohrlöchern, wobei zur chemischen Befestigung eine Epoxidharzmasse nach Anspruch 10 oder ein Mehrkomponenten-Epoxidharzsystem Anspruch 11 oder 12 verwendet wird.

**14.** Verwendung einer Aminmischung enthaltend 5 bis 50 Gew.-% Diaminomethylcyclohexan und mindestens 25 Gew.-% 1,3-Cyclo-hexan-bis(methyl-amin) bezogen auf das Gesamtgewicht der Aminmischung in einer Härterzusammensetzung für eine Epoxidharzmasse zur Verbesserung der Auszugsfestigkeiten bei hohen Temperaturen.

**Claims**

**1.** Curing agent composition comprising an amine mixture and an at least one salt (S) as an accelerator, the salt (S) used as an accelerator being selected from the group consisting of salts of nitric acid, salts of nitrous acid, salts of halogens, salts of trifluoromethanesulphonic acid, and combinations thereof, **characterized in that** the amine mixture comprises 5 to 50 wt.% of diaminomethylcyclohexane and at least 25 wt.% of 1,3-cyclohexanebis(methylamine) based on the total weight of the amine mixture.

**2.** Curing agent composition according to claim 1, **characterized in that** the amine mixture comprises 25 to 95 wt.% of 1,3-cyclohexanebis(methylamine) based on the total weight of the amine mixture.

**3.** Curing agent composition according to either claim 1 or claim 2, **characterized in that** the amine mixture additionally comprises 1,3-benzenedimethanamine.

**4.** Curing agent composition according to claim 3, **characterized in that** the amine mixture comprises ≤ 55 wt.% of 1,3-benzenedimethanamine based on the total weight of the amine mixture.

**5.** Curing agent composition according to any of the preceding claims, **characterized in that** the amine mixture is contained in the curing agent composition in a proportion of 30 to 98 wt.% based on the total weight of the curing agent composition.

**6.** Curing agent composition according to any of the preceding claims, **characterized in that** the salt (S) is contained in the curing agent composition in a proportion of 0.1 to 15 wt.% based on the total weight of the curing agent composition.

**7.** Curing agent composition according to any of the preceding claims, **characterized in that** the amine mixture comprises 5 to 50 wt.% of diaminomethylcyclohexane, 30 to 80 wt.% of 1,3-cyclohexanebis(methylamine), and 10 to 55 wt.% of 1,3-benzenedimethanamine, in each case based on the total weight of the amine mixture.

**8.** Curing agent composition according to any of the preceding claims, **characterized in that** the salt (S) is selected from the group consisting of nitrate ($NO_3^-$), iodide ($I^-$), triflate ($CF_3SO_3^-$) and combinations thereof.

**9.** Curing agent composition according to any of the preceding claims, **characterized in that** the salt (S) comprises a cation selected from the group consisting of alkali metals, alkaline earth metals, lanthanoids, aluminum, ammonium, and combinations thereof.

**10.** Epoxy resin composition containing at least one curable epoxy resin and a curing agent composition according to any of the preceding claims.

**11.** Multi-component epoxy resin system comprising an epoxy resin component (A) and a hardener component, the epoxy resin component (A) containing a curable epoxy resin and the hardener component comprising an amine mixture, a salt (S) being selected from salts of nitric acid, salts of nitrous acid, salts of halogens, salts of trifluoromethanesulfonic acid, and combinations thereof in the epoxy resin component (A) and/or in the hardener component, **characterized in that** the amine mixture contains 5 to 50 wt.% of diaminomethylcyclohexane and at least 25 wt.% of 1,3-cyclohexanebis(methylamine) based on the total weight of the amine mixture.

**12.** Multi-component epoxy resin system according to claim 11, **characterized in that** the salt (S) is contained in the hardener component.

**13.** Method for chemical fastening of structural elements in boreholes, wherein an epoxy resin composition according to claim 10 or a multi-component epoxy resin system claim 11 or claim 12 is used for chemical fastening.

**14.** Use of an amine mixture containing 5 to 50 wt.% of diaminomethylcyclohexane and at least 25 wt.% of 1,3-cyclohexanebis(methylamine) based on the total weight of the amine mixture in a curing agent composition for an epoxy resin composition to improve the pull-out strengths at high temperatures.


**Revendications**

**1.** Composition de durcisseur comprenant un mélange d'amines et un au moins un sel (S) comme accélérateur, dans lequel le sel (S) utilisé comme accélérateur est choisi dans le groupe constitué de sels de l'acide nitrique, sels de l'acide nitreux, sels d'halogènes, sels de l'acide trifluorométhanesulfonique et de combinaisons de ceux-ci, **caractérisée en ce que** le mélange d'amines comprend 5 à 50 % en poids de diaminométhylcyclohexane et au moins 25 % en poids de 1,3-cyclo-hexane-bis(méthyl-amine) par rapport au poids total du mélange d'amines.

**2.** Composition de durcisseur selon la revendication 1, **caractérisée en ce que** le mélange d'amines comprend 25 à 95 % en poids de 1,3-cyclo-hexane-bis(méthyl-amine) par rapport au poids total du mélange d'amines.

**3.** Composition de durcisseur selon la revendication 1 ou 2, **caractérisée en ce que** le mélange d'amines comprend en outre du 1,3-benzènediméthanamine.

**4.** Composition de durcisseur selon la revendication 3, **caractérisée en ce que** le mélange d'amines comprend $\leq 55$ % en poids de 1,3-benzènediméthanamine par rapport au poids total du mélange d'amines.

**5.** Composition de durcisseur selon l'une des revendications précédentes, **caractérisée en ce que** le mélange d'amines est contenu dans la composition de durcisseur en une proportion de 30 à 98 % en poids par rapport au poids total de la composition de durcisseur.

**6.** Composition de durcisseur selon l'une des revendications précédentes, **caractérisée en ce que** le sel (S) est contenu dans la composition de durcisseur en une proportion de 0,1 à 15 % en poids par rapport au poids total de la composition de durcisseur.

**7.** Composition de durcisseur selon l'une des revendications précédentes, **caractérisée en ce que** le mélange d'amines comprend 5 à 50 % en poids de diaminométhylcyclohexane, 30 à 80 % en poids de 1,3-cyclo-hexane-bis(méthyl-amine) et 10 à 55 % en poids de 1,3-benzènediméthanamine, respectivement par rapport au poids total du mélange d'amines.

**8.** Composition de durcisseur selon l'une des revendications précédentes, **caractérisée en ce que** le sel (S) est choisi dans le groupe constitué de nitrate ($NO_3^-$), iodure ($I^-$), triflate ($CF_3SO_3^-$) et de combinaisons de ceux-ci.

**9.** Composition de durcisseur selon l'une des revendications précédentes, **caractérisée en ce que** le sel (S) comprend un cation choisi dans le groupe constitué de métaux alcalins, métaux alcalino-terreux, lanthanides, aluminium, ammonium et de combinaisons de ceux-ci.

**10.** Matière de résine époxy contenant au moins une résine époxy durcissable et une composition de durcisseur selon l'une des revendications précédentes.

**11.** Système de résine époxy à plusieurs composants comprenant un composant de résine époxy (A) et un composant de durcisseur, dans lequel le composant de résine époxy (A) contient une résine époxy durcissable et le composant de durcisseur comprend un mélange d'amines, dans lequel un sel (S) choisi parmi les sels de l'acide nitrique, sels de l'acide nitreux, sels d'halogènes, sels de l'acide trifluorométhanesulfonique et des combinaisons de ceux-ci est contenu dans le composant de résine époxy (A) et/ou dans le composant de durcisseur, **caractérisé en ce que** le mélange d'amines contient 5 à 50 % en poids de diaminométhylcyclohexane et au moins 25 % en poids de 1,3-cyclo-hexane-bis(méthyl-amine) par rapport au poids total du mélange d'amines.

**12.** Système de résine époxy à plusieurs composants selon la revendication 11, **caractérisé en ce que** le sel (S) est contenu dans le composant de durcisseur.

**13.** Procédé permettant la fixation chimique d'éléments de construction dans des trous de forage, dans lequel une matière de résine époxy selon la revendication 10 ou un système de résine époxy à plusieurs composants la revendication 11 ou 12 est utilisé pour la fixation chimique.

**14.** Utilisation d'un mélange d'amines contenant 5 à 50 % en poids de diaminométhylcyclohexane et au moins 25 % en poids de 1,3-cyclo-hexane-bis(méthyl-amine) par rapport au poids total du mélange d'amines dans une composition de durcisseur pour une matière de résine époxy permettant d'améliorer la résistance à l'arrachement lors de températures élevées.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 18195417
- EP 18195422
- EP 18195415
- WO 2011033104 A1
- US 2017081487 A
- EP 2478030 A1
- EP 3000792 A1

**In der Beschreibung aufgeführte Nicht-Patentliteratur**

- IUPAC Compendium of Chemical Terminology. Blackwell Scientific Publications, 1997
- **MICHAEL DORNBUSCH ; ULRICH CHRIST ; ROB RASING.** Epoxidharze. Vincentz Network GmbH & Co KG, 2015
- *CHEMICAL ABSTRACTS,* 56-81-5